(19) Europäisches Patentamt
European Patent Office
Office européen des brevets

(11) **EP 3 378 555 A1**

(12) **EUROPEAN PATENT APPLICATION**
published in accordance with Art. 153(4) EPC

(43) Date of publication:
26.09.2018 Bulletin 2018/39

(21) Application number: 16866058.7

(22) Date of filing: 11.10.2016

(51) Int Cl.:
*B01J 20/06* (2006.01)          *B01J 20/30* (2006.01)
*C01G 45/02* (2006.01)          *G21F 9/12* (2006.01)

(86) International application number:
**PCT/JP2016/080081**

(87) International publication number:
**WO 2017/086056 (26.05.2017 Gazette 2017/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.11.2015 JP 2015225614**

(71) Applicants:
• **National University Corporation Kagawa
University**
**Takamatsu-shi, Kagawa 760-8521 (JP)**

• **K&A Environmental System Co., Ltd.**
**Tokorozawa-shi, Saitama 359-1106 (JP)**

(72) Inventor: **FENG, Qi**
**Takamatsu-shi**
**Kagawa 761-0396 (JP)**

(74) Representative: **J A Kemp**
**14 South Square**
**Gray's Inn**
**London WC1R 5JJ (GB)**

(54) **STRONTIUM ION ADSORBENT AND METHOD FOR PRODUCING SAME**

(57)     A strontium ion adsorbent containing a manganese oxide that has a layered crystal structure and contains sodium ions in its interlayer spaces thereof.

Fig. 1

$Na_{0.7}MnO_{2.05}$

: $Na^+$

$MnO_6$
OCTAHEDRON

EP 3 378 555 A1

**Description**

Technical Field:

This invention relates to a strontium ion adsorbent and a process for producing the same. More specifically, the invention relates to a strontium ion adsorbent for selectively adsorbing the strontium ions in the seawater and to a process for producing the same.

Background Art:

In an initial stage of accident in Fukushima No.1 nuclear power plants, the seawater was poured in large amounts into the reactor containment vessels. Therefore, it has now been urged to treat the resulting radiation contaminated water. The seawater contains the sodium ions ($Na^+$), magnesium ions ($Mg^{2+}$), calcium ions ($Ca^{2+}$) and potassium ions ($K^+$) at high concentrations . They are the same alkali metals or the alkaline earth metals as the cesium ions ($Cs^+$) and the strontium ions ($Sr^{2+}$), are similar in properties, and dissolve well in the water. To remove the radioactive cesium ions and strontium ions from the radiation contaminated water that contains seawater components, therefore, it becomes necessary to use adsorbents having high selectivity for adsorbing cesium ions and strontium ions.
As the adsorbents for highly selectively adsorbing the cesium ions, there have been known crystalline silicotitanate (CST) and iron ferrocyanide. These adsorbents are capable of adsorbing the cesium ions highly selectively.
As the adsorbents for highly selectively adsorbing the strontium ions, there have been known crystalline silicotitanate (CST), zeolite, potassium tetratitanate ($K_2Ti_4O_9$), potassium bititanate ($K_2Ti_2O_5$) and hollandite-type manganese oxide ($K_2Mn_8O_{14}$) (non-patent documents 1 to 3) . However, these adsorbents are not capable of adsorbing the strontium ions in the seawater to a sufficient degree.

Prior Art Documents:

Non-patent Documents:

Non-patent document 1: Y. Kaji, T. Asano, "Development of an adsorbent capable of adsorbing cesium and strontium simultaneously", Isotope News, Dec., 2013, No. 716, pp. 18-22.
Non-patent document 2: K. Mori, M. Iwasaki, H. Mimura, H. Kanda, "Development of a strontium adsorbent using a layered potassium titanate as a base material", J. Ion Exchange, Vol. 26, No. 3, pp. 6-12 (2015).
Non-patent document 3: Q. Feng, H. Kanoh, Y. Miyai, K. Ooi, "Alkali metal ions insertion/extraction reactions with hollandite-type manganese oxide in the aqueous phase", Chem. Mater. 7, pp. 148-253 (1995).

Outline of the Invention:

Problems that the Invention is to Solve:

In view of the above-mentioned circumstances, it is an object of the present invention to provide a strontium adsorbent that is capable of effectively adsorbing the strontium ions in the seawater and a process for producing the same.

Means for Solving the Problems:

According to the present invention, there is provided a strontium ion adsorbent containing a manganese oxide that has a layered crystal structure and contains the sodium ions in its interlayer spaces.
Described below are preferred embodiments of the strontium ion adsorbent of the present invention.

(A) The manganese oxide exhibits diffraction peaks specific to the layered crystal structure in the regions of $2\theta =$ 15 to 17 degrees, 31 to 34 degrees and 35 to 38 degrees, respectively, in the X-ray diffraction (Cu-K$\alpha$);
(B) The manganese oxide contained in the strontium ion adsorbent has a tunnel crystal structure containing the sodium ions in the tunnels thereof and that exhibits diffraction peaks specific to the tunnel crystal structure in the regions of $2\theta =$ 13 to 15 degrees, 15 to 18 degrees, 18 to 21 degrees, 33 to 35 degrees, 36 to 39 degrees and 50 to 53 degrees, respectively, in the X-ray diffraction (Cu-K$\alpha$);
(C) The strontium ion adsorbent has an atomic composition represented by the following formula (1) or (2):

$$Na_xT_yMn_{1-y} \qquad (1)$$

wherein

T is a polyvalent metal, and
x and y are numbers, respectively, satisfying $0.4 \leqq x \leqq 1$, and $0 \leqq y \leqq 0.44$,

$$Na_xLi_zMn_{1-z} \qquad (2)$$

wherein

Li is a lithium atom substituted for Mn, and
x and z are numbers, respectively, satisfying $0.4 \leqq x \leqq 1$, and $0 < z \leqq 0.33$;

(D) The polyvalent metal T in the above formula (1) is Al, Co, Ni, Cu or Mg;
(E) In the above formulas (1) and (2), x is a number satisfying $0.44 \leqq x \leqq 1$;
(F) In the above formulas (1) and (2), x is a number satisfying $0.6 \leqq x \leqq 1$; and
(G) The strontium ion adsorbent contains a manganese oxide that has an $Na_{0.7}MnO_{2.05}$ layered crystal structure containing the sodium ions in the interlayer spaces thereof.

According to the present invention, further, there is provided a process for producing the strontium ion adsorbent by mixing at least one kind of an interlayer metal source compound selected from the group consisting of a sodium salt, a sodium oxide and a sodium hydroxide, and at least one kind of a manganese source compound selected from the group consisting of a manganese salt, a manganese oxide and a manganese hydroxide, and firing the mixture thereof at a temperature of not lower than 400°C.

The production process of the present invention can, further, assume the following embodiments depending on the chemical composition of the desired strontium ion adsorbent;

(H) At least one kind of a polyvalent metal source compound selected from the group consisting of a polyvalent metal salt, a polyvalent metal oxide and a polyvalent metal hydroxide, is fired upon being mixed with the interlayer metal source compound and the manganese source compound; and

(I) At least one kind of a lithium source compound selected from the group consisting of a lithium salt, a lithium oxide and a lithium hydroxide is used as the Mn-substituted metal source, and is fired upon being mixed with the interlayer metal source compound and the manganese source compound.

Effects of the Invention:

The strontium ion adsorbent of the present invention highly selectively adsorbs the strontium ions, and is capable of effectively adsorbing the strontium ions present, specifically, in the seawater.

Besides, the strontium ion adsorbent can be produced by firing (i.e., solid phase reaction) a mixture of an interlayer metal source compound containing Na and a manganese source compound without using any solvent, offering great advantages such as no need for removing the solvent and economy in the cost of production.

Brief Description of the Drawings:

[Fig. 1] It is a schematic diagram illustrating the crystal structure of a manganese oxide that has a layered crystal structure and contains the sodium ions in the interlayer spaces .

[Fig. 2] It is a schematic diagram illustrating the crystal structure of a manganese oxide that has a tunnel crystal structure and contains the sodium ions in the tunnels.

[Fig. 3] It is a graph of XRD patterns of NMOs synthetized in an Experiment 1 (1).

[Fig. 4] It shows SEM images of the NMOs synthesized in the Experiment 1 (1).

[Fig. 5] It is a graph of XRD patterns of NAMOs synthetized in an Experiment 1 (2).

[Fig. 6] It shows SEM images of the NAMOs synthesized in the Experiment 1 (2).

[Fig. 7] It is a graph of XRD patterns of NLMOs synthetized in an Experiment 1 (3).

[Fig. 8] It is a graph showing the amounts of the Sr ions adsorbed from the seawater of a concentration of 50% by using the manganese oxides synthesized in the Experiments 1 (1) to (3).

[Fig. 9] It is a graph showing the amounts of the Sr ions adsorbed from the seawater of a concentration of 100% by using the manganese oxides synthesized in the Experiments 1 (1) to (3).

[Fig. 10] It is a graph showing distribution coefficients of the adsorbents found by using the seawater of the concentration of 100%.

[Fig. 11] It is a graph of XRD patterns of NMOs synthetized in an Experiment 2 (1).

[Fig. 12] It is a graph showing the amounts of the Sr ions adsorbed from the standard seawater (seawater of a concentration of 100% that has not been diluted) by using the NMOs synthetized in the Experiments 2 (1).

[Fig. 13] It is a graph of XRD patterns of the samples obtained by washing with water the NMOs synthetized in the Experiment 2 (1).

[Fig. 14] It is a graph showing the amounts of the Sr ions adsorbed from the standard seawater (seawater of the concentration of 100% that has not been diluted) by using the water-washed samples used for the measurement in Fig. 13.

[Fig. 15] It is a graph of XRD patterns of NMOs synthetized in an Experiment 2 (2).

[Fig. 16] It is a graph showing the amounts of the Sr ions adsorbed from the seawater of the concentration of 100% by using the NMOs synthetized in the Experiments 2 (2).

[Fig. 17] It is a graph of XRD patterns of NMOs synthetized in an Experiment 3 (1).

[Fig. 18] It is a graph of XRD patterns of NMOs synthetized in an Experiment 3 (2).

[Fig. 19] It is a graph of XRD patterns of NMOs synthetized in an Experiment 3 (3).

[Fig. 20] It is a graph of XRD patterns of NMOs synthetized in an Experiment 3 (4).

[Fig. 21] It is a graph showing the amounts of the Sr ions adsorbed from the seawater of the concentration of 100% by using the NMOs synthetized in the Experiments 3 (1) to (4).

[Fig. 22] It is a graph of XRD patterns of NLMOs synthetized in an Experiment 4 (1).

[Fig. 23] It is a graph of XRD patterns of NTMOs synthetized in an Experiment 4 (2).

[Fig. 24] It is a graph showing the amounts of the Sr ions adsorbed from the seawater of the concentration of 100% by using the manganese oxides synthetized in the Experiments 4 (1) and (2) .

[Fig. 25] It is a graph of XRD patterns of NMgMOs synthetized in an Experiment 5.

[Fig. 26] It is a graph of XRD patterns of $Na_{1.0}Li_{0.33}Mn_{0.67}O_2$ synthetized in an Experiment 6.

Modes for Carrying Out the Invention:

(Strontium ion adsorbent)

The strontium ion adsorbent (hereinafter often abbreviated simply as "Sr adsorbent") of the present invention contains a manganese oxide that has a layered crystal structure (hereinafter often abbreviated simply as "layered structure") and contains sodium ions in its interlayer spaces thereof.

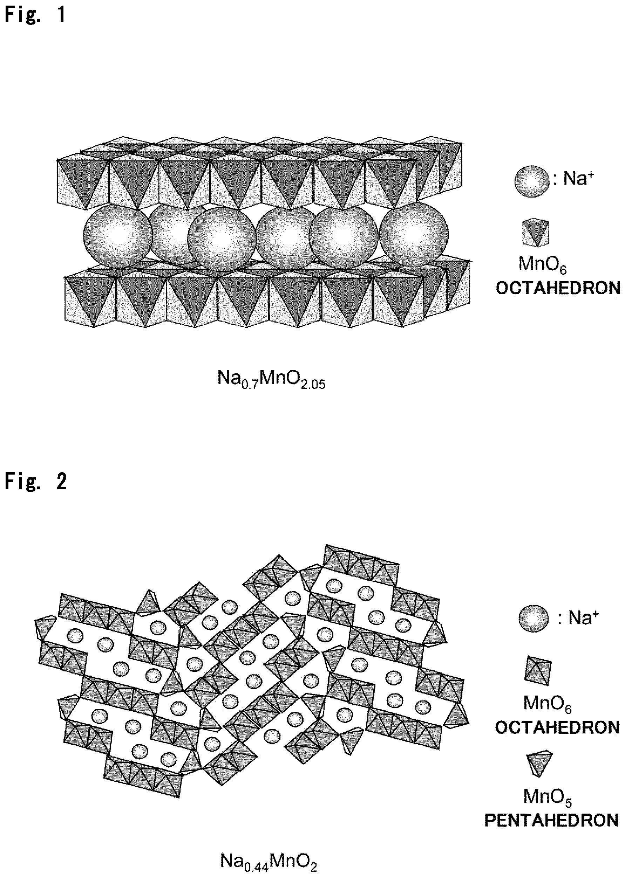

Fig. 1 shows the crystal structure of the above manganese oxide that has the layered structure in which Na ions are present in the interlayer spaces.

As will be understood from Fig. 1, the crystal structure of the manganese oxide has an octahedron ($MnO_6$) in which a trivalent or tetravalent Mn is surrounded by six O ions. The $MnO_6$ octahedrons share their edges and, therefore, are arranged continuously to form octahedral layers. Among the octahedral layers, the sodium ions are present so as to compensate for a balance of electric charge.

A representative substance having the above layered structure is a composition expressed by $Na_{0.7}MnO_{2.05}$ which can be confirmed by the XRD, i.e., can be confirmed by a diffraction peak expressed near $2\theta = 16$ degrees due to the (001) plane. In the X-ray diffraction (Cu-K$\alpha$), for instance, the above substance exhibits diffraction peaks specific to the layered structure in the regions of $2\theta = 15$ to 17 degree, 31 to 34 degrees and 35 to 38 degrees, respectively. The layered structure of this kind is often maintained despite some of Mn atoms are substituted with other metal atoms.

The manganese oxide having the above-mentioned layered crystal structure has a cation-exchange capability due to its layered structure and is, specifically, capable of adsorbing strontium ions as the Na ions in the interlayer spaces can be ion-exchanged with strontium ions in a solution.

For example, the effective ionic radius of the strontium ion is 1.16 Å while the effective ionic radius of the Na ion is 1.02 Å which is nearly the same as the effective ionic radius of the strontium ion.

When the Na ions are present in the interlayer spaces, the basal spacing, namely the interplanar spacing of the (001) plane, is in a region of about 5.55 to about 5.57 Å. This basal spacing corresponds to an interlayer spacing that is close to the size of a water molecule allowing the water molecules to infiltrate into the interlayer spaces and, therefore, causing the basal spacing to be expanded a little more (in a region of about 7.0 to about 7.2 Å). This permits the Sr ions in the seawater to easily enter therein. Namely, the layered manganese oxide with the Na ions in the interlayer spaces exhibits a significant ion-sieve effect for adsorbing strontium ions and, therefore, excellently and selectively adsorbs the strontium ions in the seawater in which various kinds of ions are present. That is, the layered manganese oxide effectively adsorbs the strontium ions present in the seawater.

When the water molecules are introduced into the interlayer spaces as described above, the basal spacing expands to some extent, which results that some of the X-ray diffraction peaks specific to the layered structure are shifted slightly toward lower angle side. In the X-ray diffraction (Cu-K$\alpha$), for instance, specific diffraction peaks are exhibited in the regions of $2\theta$ = 11.5 to 13.5 degrees, 24 to 26 degrees and 35 to 38 degrees, respectively. After the water molecules have been removed by drying or the like method, the specific diffraction peaks appear again at the above-mentioned initial positions.

The manganese oxide having the above-mentioned layered structure is obtained in a form in which other manganese oxides are also contained due to the process of its production. For example, there is often contained a manganese oxide that has a tunnel crystal structure in which the sodium ions are present in the tunnels thereof. The layered structure is transformed to the tunnel crystal structure (hereinafter often referred to simply as "tunnel structure") since the sodium ions present in the interlayer spaces could serve as a template for the formation of the tunnel structure due to the heating at the time of synthesizing the manganese oxide of the above-mentioned layered crystal structure by the solid phase reaction that will be described later.

Fig. 2 schematically illustrates the crystalline form of a tunnel structure derived from the layered structure in which the Na ions are present in the interlayer spaces. The crystal structure is constructed by linking the $MnO_6$ octahedrons and the $MnO_5$ pentahedrons of the manganese oxide together to form a skeleton of tunnel structure. Formation of the tunnel structure can be confirmed by, for example, the XRD, i.e., from the appearance of the diffraction peak near $2\theta$ = 34 degree, which is specific to the tunnel structure. In the X-ray diffraction (Cu-K$\alpha$), for example, the tunnel crystal structure exhibits its specific diffraction peaks in the regions of $2\theta$ = 13 to 15 degrees, 15 to 18 degrees, 18 to 21 degrees, 33 to 35 degrees, 36 to 39 degrees and 50 to 53 degrees, respectively.

The manganese oxide having the above tunnel structure, too, has a tunnel size nearly the same as the interlayer spacing of the layered structure and, therefore, adsorbs the strontium ions highly selectively.

Here, however, the property for selectively adsorbing the strontium ions exhibited by the manganese oxide having the tunnel structure is not as strong as that of the manganese oxide having the layered structure. This is because the Sr ions are less freely permitted to enter into or come out of the tunnels than into or out of the interlayer spaces of the layered structure.

Therefore, the Sr adsorbent of the present invention may contain the manganese oxide of the tunnel structure together with the manganese oxide of the above-mentioned layered structure though it is desired that formation of the tunnel structure is suppressed. For instance, it is desired that a ratio $\alpha/\beta$ of the intensity $\alpha$ of the X-ray diffraction peak near $2\theta$ = 35 degrees specific to the tunnel structure and the intensity $\beta$ of the X-ray diffraction peak of the (001) plane that represents the presence of the layered structure, is not more than 10 and, specifically, lies in a range of 0 to 1.

In the manganese oxides having the above-mentioned octahedral layered structure and the tunnel structure of the present invention, some of the Mn sites in the $MnO_6$ octahedron of the layered structure or in the tunnel structure may be substituted with other metals. The Sr adsorbent of the present invention containing the manganese oxide has an atomic composition represented by the following formula (1) or (2):

$$Na_xT_yMn_{1-y} \qquad (1)$$

wherein

T is a polyvalent metal, and
x and y are numbers, respectively, satisfying $0.4 \leqq x \leqq 1$, and $0 \leqq y \leqq 0.44$,

$$Na_xLi_zMn_{1-z} \qquad (2)$$

wherein

Li is a lithium atom substituted for Mn, and
x and z are numbers, respectively, satisfying $0.4 \leqq x \leqq 1$, and $0 < z \leqq 0.33$.

Like Na, further, Li is also an alkali metal but has a small ionic radius which is close to the ionic radius of Mn. Therefore, rather than being present in the interlayer spaces or in the tunnels, Li substitutes for Mn and is present in the Mn site in the crystal structure skeleton as represented by the formula (2).

Further, the polyvalent metal T in the formula (1) is present in part of the Mn site in the crystal structure skeleton substituting for Mn. Examples of the polyvalent metal T include Mg, Ni, Co, Cu, Al, Fe, Ti, V and Nb though not limited thereto only. A plurality of polyvalent metals may be substituted for part of the Mn site. Specifically preferred are Al, Co, Ni, Cu and Mg.

Therefore, the Sr adsorbents of the present invention can be classified into those of the unsubstituted type, polyvalent metal-substituted type and Li-substituted type depending upon their compositions.

Unsubstituted type;

The Sr adsorbent of this type has a metal atomic composition represented by the above-mentioned formula (1) in which y = 0. That is, the Sr adsorbent contains the Mn oxide of which the Mn site in the crystal structure skeleton has not been substituted with any other metals (e.g., polyvalent metal T or Li atom) . The composition of the Mn oxide is represented by the following formula (1a),

$$Na_xMnO_{2+q} \qquad (1a)$$

wherein

x is a number that satisfies $0.4 \leqq x \leqq 1$ like in the above formula (1), and
q is a number that satisfies $0 \leqq q \leqq 0.5$.

Polyvalent metal-substituted type;

The Sr adsorbent of this type has a metal atomic composition represented by the above-mentioned formula (1) in which y > 0. That is, the Sr adsorbent contains the Mn oxide of which the Mn site in the crystal structure skeleton has been partly substituted with the above-mentioned polyvalent metal T. The composition of the Mn oxide is represented by, for example, the following formula (1b),

$$Na_xT_yMn_{1-y}O_{2+q} \qquad (1b)$$

wherein

T is the above-mentioned polyvalent metal,
x is a number that satisfies $0.4 \leqq x \leqq 1$ like in the above formula (1),
y is a number that satisfies $0 < y \leqq 0.44$, and
q is a number that satisfies $0 \leqq q \leqq 0.5$ like in the above formula (1a).

Li-substituted type;

The Sr adsorbent of this type contains a manganese oxide that has the metal atomic composition represented by the above formula (2). The composition of the manganese oxide is represented by the following formula (2a),

$$Na_xLi_zMn_{1-z}O_{2+q} \qquad (2a)$$

wherein

x and z are numbers that satisfy $0.4 \leqq x \leqq 1$ and $0 < z \leqq 0.33$ like in the above formula (2), and
q is a number that satisfies $0 \leqq q \leqq 0.5$ like in the above formulas (1a) and (1b).

That is, the Sr adsorbent represented by the above formula contains a manganese oxide having a crystal structure in which the Mn site in the crystal structure skeleton is partly substituted with lithium (Li). In this case, Li has a radius close to that of Mn, and is not almost introduced into the interlayer spaces (or into the tunnels) by the firing that will be described later. Namely, lithium is introduced into part of the $MnO_6$ octahedron or into part of the Mn site in the tunnel structure by being substituted for Mn.

Here, as described earlier, the manganese oxide represented by the above formulas (1a), (1b) or (2a) has a layered crystal structure of $MnO_6$ octahedrons, and contains the Mn oxide that has the tunnel crystal structure stemming from the above layered structure. This is because the tunnel structure is formed from the layered structure since the sodium ions present in the interlayer spaces serve as templates due to the heating at the time of synthesizing the manganese oxide of the above-mentioned crystal structure by the solid phase reaction that will be described later.

The manganese oxide having the above tunnel structure, ideally, has a mole ratio Na/Mn of the sodium ions present in the tunnels and manganese of 0.44, and its composition is expressed as $Na_{0.44}MnO_2$.

In the Sr adsorbent of the present invention, what adsorbs the strontium to the highest degree is the manganese oxide that has the layered crystal structure in which the sodium ions are present in the interlayer spaces. The manganese oxide having the tunnel crystal structure does not absorb the strontium as strongly as the manganese oxide that has the layered crystal structure.

In the Sr adsorbent of the present invention, therefore, the smaller the content of the manganese oxide of the tunnel crystal structure, the higher the capability for adsorbing the strontium. In the above-mentioned formula (1) or (2) (or formulas (1a), (1b) and (2a)), therefore, it is desired that x has a large value, i.e., x satisfies $0.44 \leqq x \leqq 1$, more preferably, $0.44 < x \leqq 1$ and, further preferably, $0.6 \leqq x \leqq 1$. That is, in the above-mentioned range of x ($0.4 \leqq x \leqq 1$), the smaller the value of x, it means that there is contained much tunnel structure having a molar composition of Na/Mn (Na/(T + Mn) or Na/(Li + Mn) for the Mn-substituted type) of 0.44.

<Process for producing the Sr adsorbent>

The Sr adsorbent of the present invention is produced by reacting an interlayer metal source compound with a Mn source compound in the solid phase. In case the Mn site in the crystal structure skeleton is to be partly substituted with the polyvalent metal T or Li atom, there are used the polyvalent metal source compound or the Li source compound together with the interlayer metal source compound and the Mn source compound.

As the interlayer metal source compound, a sodium compound is used, as a matter of course.

As the sodium compound, there can be used at least one of such salts as sodium carbonate, sodium hydrogen carbonate, sodium nitrate, sodium sulfate and sodium acetate; oxides such as sodium oxide and the like; and hydroxides of sodium such as sodium hydroxide and the like. Among them, sodium carbonate is specifically preferred.

As the Mn source compound, there can be used at least one of manganese salts such as manganese carbonate, manganese nitrate, manganese sulfate and manganese acetate; oxides of manganese such as manganese oxide and the like; and hydroxides of manganese such as manganese hydroxide and the like. Among them, manganese carbonate is specifically preferred.

As the polyvalent metal source compound, further, there can be used salts of the above-mentioned polyvalent metal T (e.g., Al), oxides and hydroxides and, specifically, hydroxides depending on the kind of the polyvalent metal that substitutes for Mn.

As the Li source compound, further, there can be used Li salts such as lithium carbonate, lithium nitrate, lithium sulfate and lithium acetate; oxides of Li such as lithium oxide and the like; and hydroxides of Li such as lithium hydroxide and the like. Among them, lithium carbonate is preferably used.

The interlayer metal source compound and the Mn source compound are reacted together in the solid phase. That is, a mixture of the two is suitably milled and dried. Or, the mixture thereof is suitably added with the polyvalent metal source compound or the lithium source compound. To the above mixture, further, a volatile solvent such as ethanol is added in small amounts to obtain a paste thereof which is then suitably milled and dried followed by firing in the open air or in an oxygen atmosphere at a temperature of not lower than 400°C. After the reaction has been finished, the reaction product is washed with water, as required, and is, further, dried to obtain the Sr adsorbent of the present invention that contains the manganese oxide having the above-mentioned layered crystal structure and containing the sodium ions in the interlayer spaces thereof.

In producing the Sr adsorbent as described above, the starting compounds are fed at such a ratio as to satisfy the atomic composition represented, for example, by the above-mentioned formula (1) or (2). Then oxygen possessed by the starting compounds or oxygen in the open air serves as the oxygen source, and there can be obtained the Sr adsorbent comprising chiefly the manganese oxide of a composition represented by the formula (1a), (1b) or (2a).

That is, the ratio of feeding the starting compounds is so set that the value x in each of the formulas lies in the range of 0.4 to 1. To obtain the oxide that contains much manganese oxide of the layered crystal structure suppressing the formation of the tunnel crystal structure, the ratio of feeding the starting compounds is so adjusted that the value x lies in the range of 0.44 to 1, more preferably, not smaller than 0.44 but not more than 1 and, most preferably, from 0.6 to 1. This enables the peak intensity ratio $\alpha/\beta$ of the above-mentioned X-ray diffraction peaks to lie within the predetermined range.

The firing temperature and the like are set to lie in suitable ranges depending on the types of the manganese oxides that constitute the desired Sr adsorbents.

Described below are the production conditions depending on the types of the manganese oxides.

Unsubstituted-type Sr adsorbent (hereinafter abbreviated as NMO) ;

The manganese oxide that constitutes the Sr adsorbent of this type is represented by the above-mentioned formula (1a), i.e.,

$$Na_xMnO_{2+q} \qquad (1a)$$

wherein

x is a number that satisfies $0.4 \leqq x \leqq 1$ (preferably, $0.44 \leqq x \leqq 1$, more preferably, $0.44 < x \leqq 1$ and, further preferably, $0.6 \leqq x \leqq 1$), and
q is a number that satisfies $0 \leqq q \leqq 0.5$.

In producing the Sr adsorbent of this type, the interlayer metal source compound and the Mn source compound are fed in such amounts that the value x in the above formula (1a) lies within the above-mentioned range, and the reaction thereof is conducted in the solid phase. Here, the firing temperature is, desirably, not lower than 400°C and, specifically, not lower than 500°C. If the firing temperature is too low, the desired layered crystal structure is not formed in a sufficient amount. If the firing temperature is too high, on the other hand, the crystal structure is broken or the tunnel structure is formed to an excess degree. Usually, therefore, the firing temperature is not higher than 1000°C and, specifically, is not higher than 600°C.

The manganese oxide having the tunnel structure represented by the above formula (1a), too, is formed together with the layered crystal structure. Here, the smaller the Na/Mn ratio or the higher the firing temperature, the larger the amount of the tunnel crystal structure. Therefore, in order to suppress the formation of the manganese oxide of the tunnel structure and to adjust the peak intensity ratio $\alpha/\beta$ to lie within the above-mentioned range (not larger than 10 and, specifically, 0 to 1), it is recommended that the starting compounds are fed in amounts as described above and, at the same time, the firing temperature is set to lie within the above-mentioned preferred range. This makes it possible to attain further improved capability for adsorbing the strontium ions.

The firing is continued at least until the starting interlayer metal source compound and the Mn source compound no longer exhibit their X-ray diffraction peaks and, instead, exhibit X-ray diffraction peaks specific to the layered crystal structure. The firing is continued, usually, for about 2 to about 8 hours though dependent upon the firing temperature.

Polyvalent metal-substituted type Sr adsorbent (hereinafter abbreviated as NTMO);

The manganese oxide that constitutes the Sr adsorbent of this type is represented by the above-mentioned formula (1b), i.e.,

$$Na_xT_yMn_{1-y}O_{2+q} \qquad (1b)$$

wherein

T is the above-mentioned polyvalent metal,
x is a number that satisfies $0.4 \leqq x \leqq 1$ (preferably, $0.44 \leqq x \leqq 1$, more preferably, $0.44 < x \leqq 1$ and, further preferably, $0.6 \leqq x \leqq 1$),
y is a number that satisfies $0 < y \leqq 0.44$, and
q is a number that satisfies $0 \leqq q \leqq 0.5$.

In producing the Sr adsorbent comprising the manganese oxide of this type, too, the starting compounds are fed at such a ratio that the value x lies within the predetermined range as described above. With this oxide, however, Mn is partly substituted with the polyvalent metal T and, therefore, the firing temperature lies in a slightly different range.

For example, the firing temperature is, usually, not lower than 400°C and is, preferably, not lower than 500°C. If the firing temperature is too high, the crystal structure is broken or the tunnel structure is formed to an excess degree. Usually, therefore, the firing temperature is not higher than 1000°C and, specifically, not higher than 800°C.

That is, in the Sr adsorbing of this type, too, the smaller the Na/Mn ratio or the higher the firing temperature, the larger the amount of the tunnel crystal structure. Therefore, in order to suppress the formation of the manganese oxide of the tunnel structure and to adjust the peak intensity ratio $\alpha/\beta$ to lie within the predetermined range, it is recommended that the value x in the formula (1b) and the firing temperature are set to lie within the above-mentioned preferred ranges. This makes it possible to attain further improved capability for adsorbing the strontium ions.

In this case, too, the firing time is, usually, from about 2 to about 8 hours.

Li-substituted type Sr adsorbent (hereinafter abbreviated as NLMO);

The manganese oxide that constitutes the Sr adsorbent of this type is represented by the above-mentioned formula (2a), i.e.,

$$Na_xLi_zMn_{1-z}O_{2+q} \qquad (2a)$$

wherein

x is a number that satisfies $0.4 \leqq x \leqq 1$ (preferably, $0.44 \leqq x \leqq 1$, more preferably, $0.44 < x \leqq 1$ and, further preferably, $0.6 \leqq x \leqq 1$),
z is a number that satisfies $0 < z \leqq 0.33$, and
q is a number that satisfies $0 \leqq q \leqq 0.5$.

In producing the Sr adsorbent of this type, Mn is partly substituted with Li and, therefore, the firing temperature is not lower than 400°C. It is, however, desired that the firing temperature is not higher than 1000°C and, more preferably, not higher than 700°C. If the firing temperature is too low, the layered crystal structure is not formed as desired. If the firing temperature is too high, on the other hand, the crystal structure breaks or the amount of the tunnel structure increases . That is, upon setting the value x in the formula (2a) and the firing temperature to lie within the above-mentioned preferred ranges, it is made possible to suppress the formation of the tunnel structure and to attain a more improved capability for adsorbing the strontium ions.

The Sr adsorbent of the present invention produced as described above is, as required, subjected to the milling and the granulation so as to acquire a suitable grain size, and is used.

The Sr adsorbent has excellent capability for selectively adsorbing even the Sr ions present in the seawater, which is superior to the adsorbents such as A-type zeolite and the like and, further, has a high adsorption rate. Therefore, the Sr adsorbent exhibits an adsorbing capability equivalent to, or more than that of, the A-type zeolite despite it is used in a small amount, and is very advantageous in cost. For example, Experimental Examples appearing later use the Sr adsorbents of the present invention to adsorb the Sr ions in the seawater of a predetermined composition (for details, see Experimental Examples) into which the Sr ions have been thrown in an amount of 10 ppm. The Sr adsorbents are adsorbing the Sr ions in amounts in excess of 2 mg/g in preferred examples (about 1.9 mg/g in the case of the A-type zeolite) and, in particularly preferred examples, in amounts in great excess of 3 mg/g, in excess of 6 mg/g and nearly 7 mg/g.

Therefore, the adsorbent of the present invention is adjusted to assume a suitable grain size and is filled in an adsorption tower. The seawater containing the strontium ions is then flown down through the adsorption tower to effectively remove the strontium ions from the seawater.

At the time of use, further, the adsorbent may be washed with water in advance to introduce the water molecules into the interlayer spaces of the layered crystal structure. The adsorbent then exhibits further improved capability for adsorbing the strontium ions.

Moreover, the Sr adsorbent of the invention can be used upon being treated with a weak acid to such a degree that the layered crystal structure possessed by the manganese oxide is not destroyed and that the sodium ions present in the interlayer spaces are ion-exchanged with the protons ($H^+$).

The Sr adsorbent of the invention may be, further, mixed with the Mn oxide component of the different type described above and may, further, contain other oxide components within a range in which excellent Sr-adsorbing capability of the Mn oxide of the $Na_{0.7}MnO_{2.05}$ layered crystal structure is not impaired.

EXAMPLES:

<Experiment 1>

Study of the crystal structures.

(Synthesis of the Sr adsorbents)

(1) NMO (unsubstituted type)

A manganese oxide of the Na-Mn-O type was synthesized according to the following procedure.

1.40 g of a sodium carbonate ($Na_2CO_3$) and 6.54 g of a manganese carbonate ($MnCO_3$) were mixed together (Na/Mn mole ratio = 0.528/1).

The mixture was added with a small amount of ethanol, and the paste thereof was mixed and milled by using a ball mill for one day. The obtained sample thereof was dried and was, thereafter, fired at predetermined temperatures (temperatures in the air: 400°C, 500°C, 600°C, 700°C, 800°C and 900°C) each for 4 hours.

The obtained fired products (synthesized products) possessed the following atomic compositions.
When fired at 400°C:

$$Na_{0.528}MnO_{2.26} (Na_{0.528}Mn(IV)O_{2.26})$$

When fired at 500°C:

$$Na_{0.528}MnO_{2.26} (Na_{0.528}Mn(IV)O_{2.26})$$

When fired at 600°C:

$$Na_{0.528}MnO_{2.18} (Na_{0.528}Mn(III)_{0.164}Mn(IV)_{0.736}O_{2.18})$$

When fired at 700°C:

$$Na_{0.528}MnO_{2.09} (Na_{0.528}Mn(III)_{0.356}Mn(IV)_{0.644}O_{2.09})$$

When fired at 800°C:

$$Na_{0.528}MnO_2 (Na_{0.528}Mn(III)_{0.528}Mn(IV)_{0.472}O_2)$$

When fired at 900°C:

$$Na_{0.528}MnO_2 (Na_{0.528}Mn(III)_{0.528}Mn(IV)_{0.472}O_2)$$

That is, when fired at low temperatures of 400°C and 500°C, tetravalent Mn forms easily but when fired at high temperatures of 800°C and 900°C, trivalent Mn forms easily.

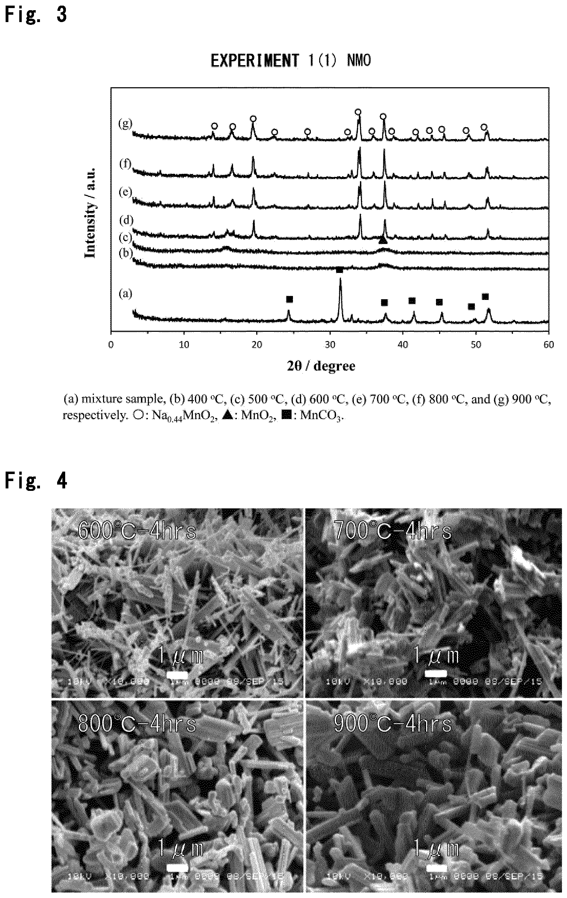

Fig. 3 shows the results of XRD measurements of the synthesized products obtained by being fired at the above temperatures.

The results of Fig. 3 tell that when fired at the temperature of 400°C (see a curve (b)), the diffraction peaks (peaks due to $MnCO_3$) of the starting mixture are extinguishing, from which it is learned that the fired product is amorphous phase forming almost no crystalline phase.

When fired at temperatures of not lower than 500 °C (see curves (c) to (g)), a diffraction peak due to the (001) plane appears near at $2\theta = 16$ degrees from which formation of the layered crystal structure ($Na_{0.7}MnO_{2.05}$) is confirmed. At the same time, there also appears a peak specific to the tunnel structure near at $2\theta = 34$ degrees indicating that the synthesized product that is obtained contains a manganese oxide having the layered crystal structure as well as a manganese oxide ($Na_{0.44}MnO_2$) having the tunnel structure.

When fired at temperatures as high as 600°C, 700°C, 800°C and 900°C (see curves (d) to (g)), it will be learned that the amount of the manganese oxide having the tunnel structure is increasing.

Fig. 4 shows SEM images of the products synthesized by being synthesized at 600 to 900°C.

As the firing temperature becomes higher, the ratio of the rod-like crystals increases and the crystal size also increases. It is considered that the rod-like crystals are corresponding to the crystal phase of the $Na_{0.44}MnO_2$ (tunnel structure).

(2) NAMO (polyvalent metal (Al)-substituted type)

A manganese oxide of the Na-Al-Mn-O type was synthesized according to the following procedure.

A starting mixture (Na/Al/Mn mole ratio = 0.462/0.44/0.56) was prepared according to the following recipe:

Sodium carbonate ($Na_2CO_3$), 2.21 g
Aluminum hydroxide ($Al(OH)_3$), 3.07 g
Manganese carbonate ($MnCO_3$), 6.54 g

The mixture was added with a small amount of ethanol, and the paste thereof was mixed and milled by using the ball mill for one day. The obtained sample thereof was dried and was, thereafter, fired at predetermined temperatures (temperatures in the air: 600°C, 700°C, 800°C and 900°C) each for 4 hours.

The obtained fired products (synthesized products) all possessed the following atomic composition.

$$Na_{0.462}Al_{0.44}MnO_{0.56}O_2$$

(x = 0.462, y = 0.44, q = 0)

Due to the substitution with Al, the tetravalent Mn was easily formed; i.e., almost all Mn was tetravalent.

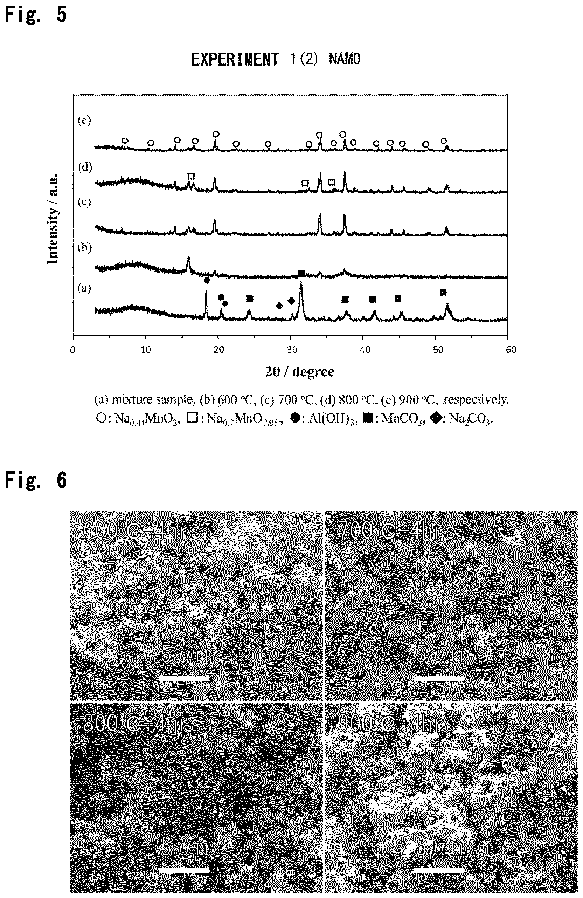

Fig. 5 shows the results of XRD measurements of the products synthesized by being fired at the above temperatures.

The results of Fig. 5 tell that when fired at the temperature of 600°C (see a curve (b)), the diffraction peaks (peaks due to $MnCO_3$, $Al(OH)_3$ and $Na_2CO_3$) of the starting mixture are extinguishing, from which it is learned that the fired product is forming the layered crystal structure ($Na_{0.7}MnO_{2.05}$) and is, further, containing small amounts of crystals (Na/(Al + Mn) = 0.44) having the tunnel structure ($Na_{0.44}MnO_2$).

When fired at temperatures as high as 700°C, 800°C and 900°C (see curves (c) to (e)), it will be learned that the amount of the manganese oxide having the tunnel structure is increasing. That is, at the temperature of as high as 900°C, there is chiefly formed $Na_{0.44}Al_{0.44}Mn_{0.56}O_2$ having the tunnel structure.

Fig. 6 shows SEM images of the products synthesized by being synthesized at the above temperatures (600°C, 700°C, 800°C and 900°C). In these cases, too, as the firing temperature becomes higher, the ratio of the rod-like crystals increases and the crystal size increases, too. The rod-like crystals are corresponding to the crystal phase of the tunnel structure having the Na/(Al + Mn) mole ratio of 0.44.

(3) NLMO (Li-substituted type).

A manganese oxide of the Na-Li-Mn-O type was synthesized according to the following procedure.

A starting mixture (Na/Li/Mn mole ratio = 0.462/0.15/0.85) was prepared according to the following recipe:

Sodium carbonate ($Na_2CO_3$), 2.89 g
Lithium carbonate ($Li_2CO_3$), 0.67 g
Manganese carbonate ($MnCO_3$), 6.54 g

The mixture was added with a small amount of ethanol, and the paste thereof was mixed and milled by using the ball mill for one day. The obtained sample thereof was dried and was, thereafter, fired at predetermined temperatures (temperatures in the air: 400°C, 500°C, 550°C, 600°C, 650°C, 700°C, 800°C and 900°C) each for 4 hours.

The obtained fired products (synthesized products) all possessed the following atomic composition.

$$Na_{0.462}Li_{0.15}MnO_{0.85}O_2$$

(x = 0.462, z = 0.15, q = 0)

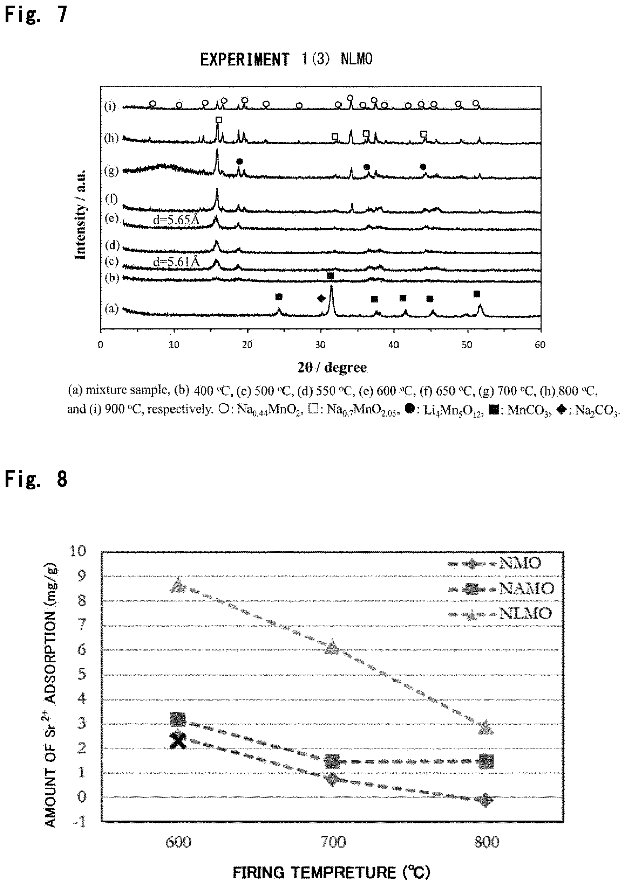

Fig. 7 shows the results of XRD measurements of the products synthesized by being fired at the above temperatures.

It is learned that when the firing temperature becomes not lower than 500°C, the synthesized product forms the layered crystal structure ($Na_{0.7}MnO_{2.05}$) (see a peak at $2\theta = 16$ degrees) and, at the same time, forms the crystals ($Li_4Mn_4O_{12}$) of the spinel-type tunnel structure in which Li is present in the tunnels (see a peak near $2\theta = 18$ degrees) though the amount thereof is small. As the firing temperature becomes not lower than 650°C, further, there is formed the tunnel structure of the Na/Mn mole ratio of 0.44 (see a peak near $2\theta = 34$ degrees) ; i.e., the amount thereof increases with an increase in the firing temperature.

In these synthesized products, too, the ratio of the rod-like crystals increases with an increase in the firing temperature.

<Evaluating the capability for adsorbing the strontium ions>

The manganese oxides obtained above were tested as described below to evaluate their capabilities for adsorbing the Sr ions.

(1) Testing the adsorption using the seawater of a concentration of 50%.

The standard seawater of the following composition was provided.

$Na^+$ concentration: 10800 ppm
$Ca^{2+}$ concentration: 412 ppm
$K^+$ concentration: 400 ppm

Mg$^{2+}$ concentration: 1280 ppm

By using the manganese oxides synthesized by the Experiment described above, their capabilities for adsorbing the strontium ions were found according to the procedure described below.

The above standard seawater was diluted to a concentration of 50%. To the thus diluted seawater, the strontium ions were added such that the concentration thereof was 10 ppm. 0.05 g of a sample manganese oxide was added to 50 ml of the Sr-containing diluted seawater, and the mixture thereof was stirred by using a stirrer for 2 days to execute the adsorption treatment.

As the sample manganese oxides, there were used synthesized products obtained by firing NMO, NAMO and NLMO at 600°C, 700°C and 800°C.

The amounts of adsorption were found by measuring the concentrations of Sr ions in the seawater before and after the adsorption treatment by using an ICP analyzer. To find the amount of adsorption, the weight of the strontium adsorbed by the adsorbent (sample manganese oxide) was found from a difference in the Sr ion concentration before and after the adsorption, and was then divided by the weight of the adsorbent.

```
Amount of adsorption
= amount of strontium decreased[mg]
/weight of the adsorbent [g]
```

Fig. 8 shows the results of tests.

The results tell that any of NMO, NAMO and NLMO show a decrease in the amount of adsorbing the Sr ions as the firing temperature becomes higher. This is attributed to that the crystals in the tunnel structure increase with an increase in the firing temperature. Namely, in the tunnel structure, it is considered that the adsorbed Sr ions diffuse into the crystals over increased distances and are less adsorbed.

When the firing temperature is the same, the amount of adsorption increases in an order of NMO, NAMO and NLMO. This corresponds to an increase in the layered crystal structure. Upon adding Al and Li, further, formation of the trivalent manganese is suppressed while formation of the tetravalent manganese increases. It is, therefore, considered that the ionic bond becomes weak between the manganese oxide and the Na ions, the ion-exchange capability of the Na ions increases, the ion-exchange capability between the Na ions and the Sr ions increases, and hence the amount of adsorption increases.

Accordingly, the NLMO obtained by being fired at 600°C shows the greatest amount of adsorption.

(2) Testing the adsorption using the seawater of a concentration of 100%.

The adsorption was tested in quite the same manner as in the above test that used the seawater of the concentration of 50% but using the above-mentioned standard seawater without diluting it.

As the sample adsorbent, there were used synthesized products obtained by firing NMO, NAMO and NLMO at the firing temperature of 600°C.

For comparison, the conventional adsorbents, i.e., $KMn_4O_8$ (hollandite structure), A-type zeolite, $Na_2Ti_3O_7$, $K_2Ti_4O_9$ and hydroxyapatite were also tested for their adsorption.

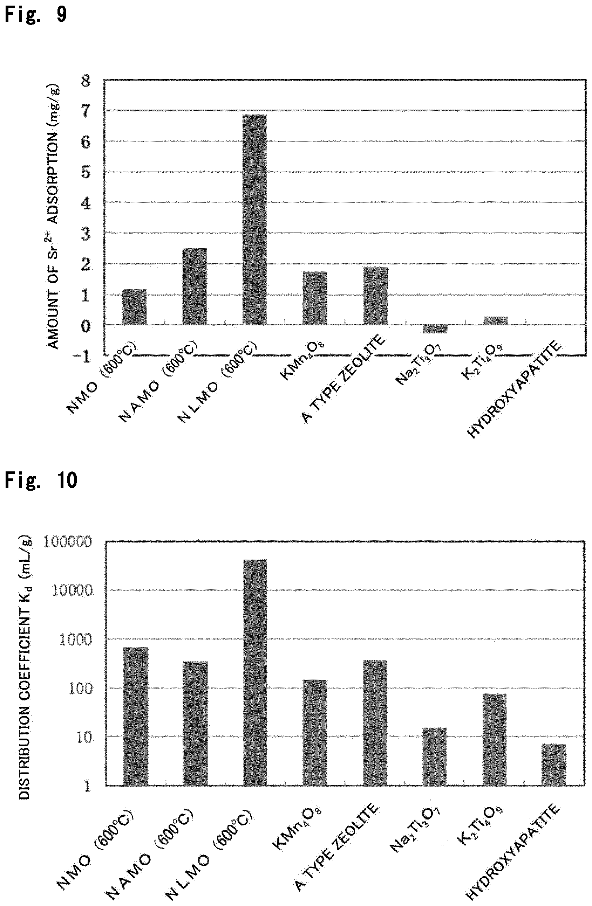

Fig. 9 shows the results of the test.

As will be understood from Fig. 9, NMO, NAMO and NLMO are showing the amounts of adsorption comparable to, or superior to, those of the conventional adsorbents. Among the conventional adsorbents, the A-type zeolite showed the largest amount of adsorption. However, NAMO and NLMO showed the amounts of adsorption that were larger than that of the A-type zeolite. Specifically, NLMO showed the amount of adsorption that was about 4 times as great as that of the A-type zeolite.

<Testing the distribution coefficients>

(1) Seawater of a concentration of 50%.

By using the standard seawater diluted to 50%, distribution coefficients of the adsorbents for the strontium ions were found according to the following procedure.

0.05g of an adsorbent was added to 50 ml of the diluted seawater to which the Sr ions have been added at a concentration of 10 ppm, and the mixture thereof was stirred by using a stirrer for 2 days so that the adsorbent adsorbed the strontium ions. As the adsorbents, there used NMO, NAMO and NLMO (fired at temperatures of 600°C, 700°C and 800°C) synthesized in the Experiment described above.

For comparison, further, distribution coefficients of the K-form hollandite manganese oxide, Na-form hollandite manganese oxide and H-form hollandite manganese oxides were also found.

The strontium ion concentrations in the diluted seawater before and after the adsorption were measured by using the ICP analyzer, and the distribution coefficients $K_d$ were found according to the following formula,

$$K_d = ((C_0 - C_t)/C_t) \times V/m$$

Co: strontium concentration in the seawater before the adsorption treatment,
$C_t$: strontium concentration in the seawater after the adsorption treatment,
V: volume of the adsorbed solution (mL), m: amount of the adsorbent added (g).

Table 1 below shows distribution coefficients $K_d$ of the adsorbents found by using the seawater diluted to the concentration of 50%.

[Table 1]

| Adsorbent | Distribution coefficient $K_d$ [mL/g] |
|---|---|
| NMO (600°C) | $3.8 \times 10^3$ |
| NMO (700°C) | $4.0 \times 10^2$ |
| NMO (800°C) | $2.0 \times 10^2$ |
| NAMO (600°C) | $5.2 \times 10^3$ |
| NAMO (700°C) | $7.7 \times 10^2$ |
| NAMO (800°C) | $6.7 \times 10^2$ |
| NLMO (600°C) | $> 10^5$ |
| NLMO (700°C) | $> 10^5$ |
| NLMO (800°C) | $3.9 \times 10^2$ |
| K-form hollandite manganese Oxide | $3.7 \times 10^2$ |
| Na-form hollandite manganese Oxide | $1.09 \times 10^3$ |
| H-form hollandite manganese Oxide | $7.8 \times 10^2$ |

(2) Seawater of a concentration of 100% (standard seawater)

Distribution coefficients were tested in quite the same manner as in the test that used the seawater of the concentration of 50% but using the above-mentioned standard seawater without diluting it. The testing method was the same as that of testing the distribution coefficients described above but using the seawater of the concentration of 100%.

As the adsorbent, there were used NMO, NAMO and NLMO (fired at 600°C). For comparison, further, the distribution coefficients of $KMn_4O_8$ (hollandite structure), A-type zeolite, $Na_2Ti_3O_7$, $K_2Ti_4O_9$ and hydroxyapatite were also found.

Fig. 10 shows the distribution coefficients $K_d$ of the adsorbents found by using the seawater of the concentration of 100%. Among the conventional adsorbents, the A-type zeolite showed the largest distribution coefficient. However, the NLMO showed the distribution coefficient that was larger than that of the A-type zeolite.

<Experiment 2>

Study of the Na/Mn mole ratio in connection with NMO;

(1) The $Na_2CO_3$ and $MnCO_3$ were mixed together at various ratios and were fired at 600°C in the same manner as in the Experiment 1 to synthesize Na-Mn-O type manganese oxides (NMO) having Na/Mn mole ratios in a range of 0.4 to 1.

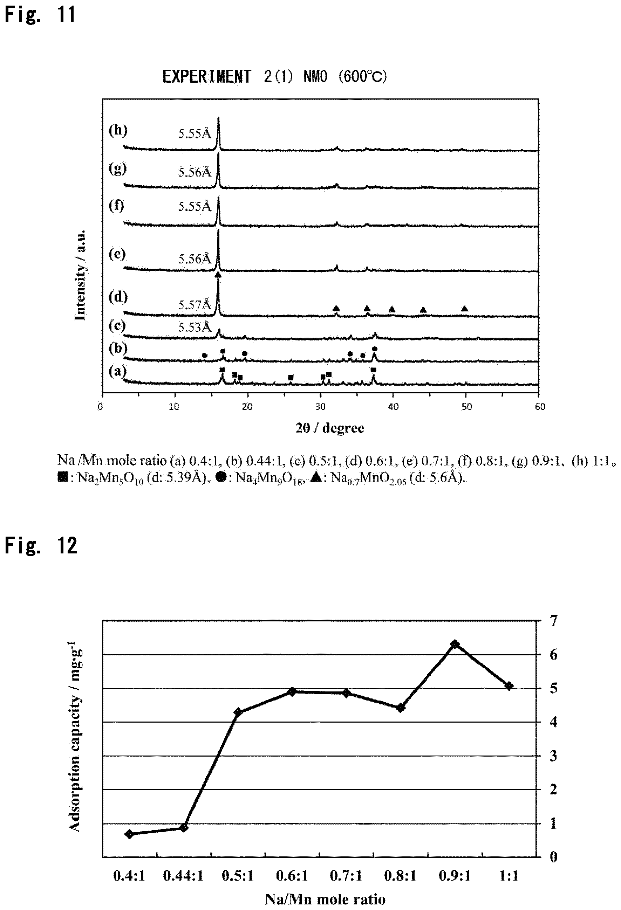

Fig. 11 shows the results of XRD measurements of the synthesized products (a) to (h) that were obtained, as well as the basal spacing d values which correspond to the diffraction peak at $2\theta = 16$ degrees of the (001) plane.

The Na/Mn mole ratios of the synthesized products and the peak intensity ratios $\alpha/\beta$ calculated from the XRD were as follows:

Synthesized product (a): Na/Mn mole ratio = 0.4
$Na_2Mn_5O_{10}$ (Romanechite) tunnel structure was formed.
Layered crystal structure was not formed.
Synthesized product (b): Na/Mn mole ratio = 0.44
$Na_{0.44}MnO_2$ tunnel structure was formed.
Layered crystal structure was not formed.
Synthesized product (c): Na/Mn mole ratio = 0.5
$\alpha/\beta = 0.5$
Synthesized product (d): Na/Mn mole ratio = 0.6
Layered crystal structure ($Na_{0.7}MnO_{2.05}$) only was formed.
Synthesized product (e): Na/Mn mole ratio = 0.7
Layered crystal structure only was formed.
Synthesized product (f): Na/Mn mole ratio = 0.8
Layered crystal structure only was formed.
Synthesized product (g): Na/Mn mole ratio = 0.9
Layered crystal structure only was formed.
Synthesized product (h): Na/Mn mole ratio = 1.0
Layered crystal structure only was formed.

The products synthesized above were subjected to the adsorption test using the standard seawater (seawater of 100% that has not been diluted) conducted in the Experiment 1 to measure their capabilities for adsorbing the Sr ions. Fig. 12 shows the results.

The above results tell that when the Na/Mn mole ratio is not smaller than 0.5 (specifically, not smaller than 0.6), formation of the tunnel structure is suppressed and the Sr ions are adsorbed in increased amounts.

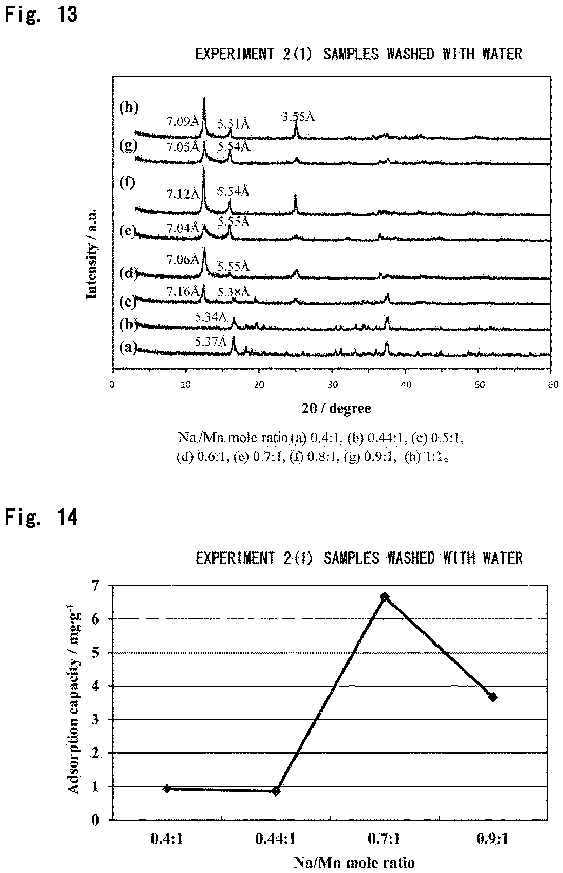

The synthesized products obtained above were washed with distilled water for one hour and were then measured by the XRD to obtain the results as shown in Fig. 13. Further, the samples after washed with water were subjected to the adsorption test using the standard seawater (seawater of the concentration of 100% that has not been diluted) in the same manner as described above to measure their capabilities for adsorbing the Sr ions. The results were as shown in Fig. 14.

The above results tell that in the synthesized products (a) and (b) ($Na_2Mn_5O_{10}$, $Na_{0.44}MnO_2$), there is no change in their structures despite of being washed with water. In the synthesized products (c) to (h), however, the basal spacing d-value is expanding from about 5.6 Å to about 7.1 Å. It is, therefore, learned that the water molecules have entered into the interlayer spaces of the layered structure ($Na_{0.7}MnO_{2.05}$) and the basal spacing d-value has expanded.

The synthesized product (a) (Na/Mn = 0.4) and the synthesized product (b) (Na/Mn = 0.44) showed no change in their structures and hence their capabilities for adsorbing Sr did not almost change before and after the washing with water. The synthesized product (e) (Na/Mn = 0.7), however, showed an increased capability for adsorbing Sr due to the washing with water. This sample contained water in an amount of about 10% as measured by the TG-DTA, and it was learned that water has entered into the interlayer spaces and the Sr-adsorbing capability has improved.

On the other hand, the synthesized product (g) (Na/Mn = 0.9) showed a decreased Sr-adsorbing capability presumably due to that some components might have dissolved.

Here, when the sample that was washed with water was dehydrated, however, it was confirmed that the initial structure was resumed.

(2) Na-Mn-O type manganese oxides (NMO) having Na/Mn mole ratios in a range of 0.4 to 1 were synthesized in the same manner as described above but executing the firing at the temperature of 500°C.

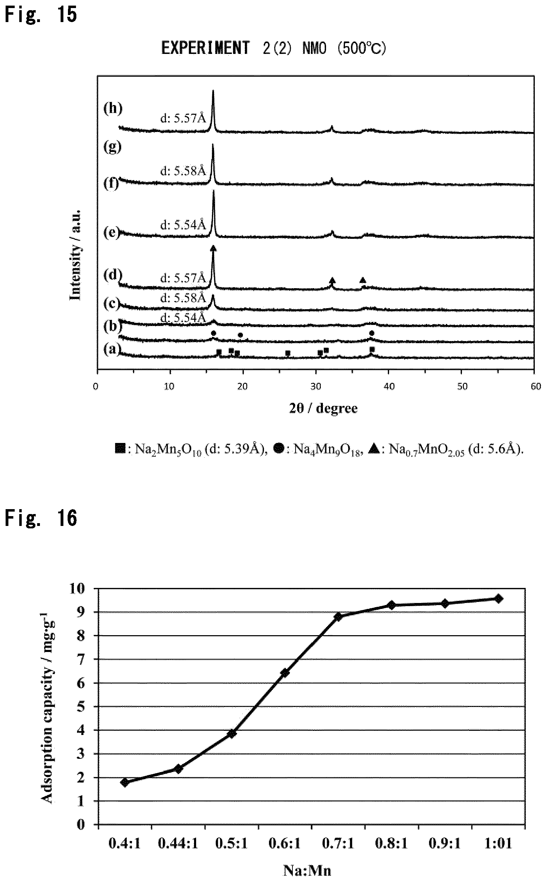

Fig. 15 shows the results of XRD measurements of the synthesized products (a) to (h) that were obtained, as well as Na/Mn mole ratios and the results of XRD analysis of the synthesized products. Fig. 15 shows also the basal spacing d-values which correspond to the diffraction peak at $2\theta = 16$ degrees of the (001) plane.

Synthesized product (a): Na/Mn mole ratio = 0.4
$Na_2Mn_5O_{10}$ (Romanechite) tunnel structure was formed.
Layered crystal structure was not formed.
Synthesized product (b): Na/Mn mole ratio = 0.44
$Na_{0.44}MnO_2$ tunnel structure was formed.
Layered crystal structure was not formed.

Synthesized product (c): Na/Mn mole ratio = 0.5
$\alpha/\beta$ = 0.7
Synthesized product (d): Na/Mn mole ratio = 0.6
$\alpha/\beta$ = 0.2
Synthesized product (e): Na/Mn mole ratio = 0.7
Layered crystal structure only was formed.
Synthesized product (f): Na/Mn mole ratio = 0.8
Layered crystal structure only was formed.
Synthesized product (g): Na/Mn mole ratio = 0.9
Layered crystal structure only was formed.
Synthesized product (h): Na/Mn mole ratio = 1.0
Layered crystal structure only was formed.

The products synthesized above were subjected to the adsorption test using the standard seawater (seawater of the concentration of 100% that has not been diluted) conducted in the Experiment 1 to measure their capabilities for adsorbing the Sr ions. Fig. 16 shows the results.

When the Na/Mn mole ratio is not smaller than 0.5 and, specifically, not smaller than 0.6, the above synthesized products, too, form the tunnel structure less and, therefore, adsorbs the Sr ions in increased amounts.

<Experiment 3>

Studying the firing temperature in connection with NMO;

(1) The $Na_2CO_3$ and $MnCO_3$ were mixed together in such amounts that an Na/Mn mole ratio was 0.4, and were fired at various temperatures (400°C to 900°C) to synthesize the Na-Mn-O type manganese oxides (NMO) having the Na/Mn mole ratio 0.4 in the same manner as in the Experiment 1.

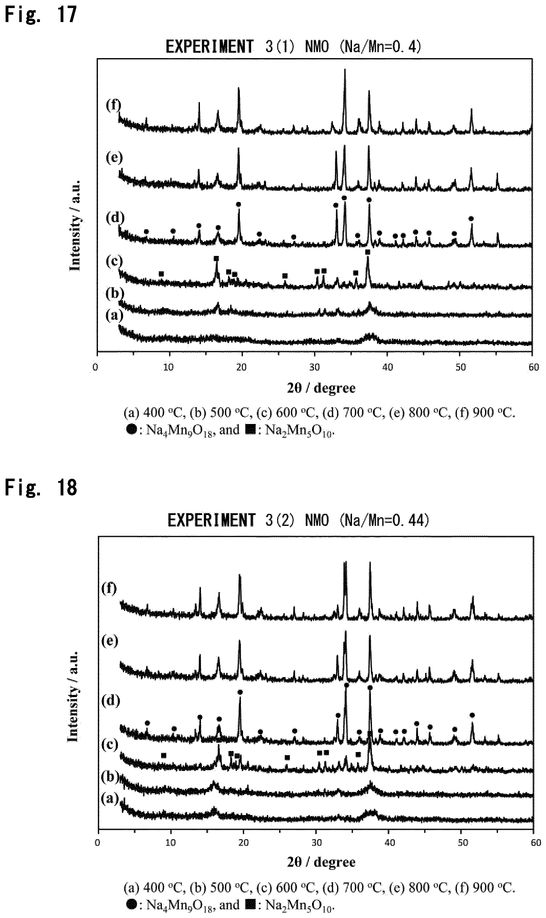

Fig. 17 shows the firing temperatures and the results of analysis by XRD measurements of the synthesized products (a) to (f) that were obtained.

Synthesized product (a): Firing temperature, 400°C.
Exhibited almost no diffraction peak. It was almost amorphous phase.
Synthesized product (b): Firing temperature, 500°C.
$Na_2Mn_5O_{10}$ (Romanechite) tunnel structure was formed.
Synthesized product (c): Firing temperature, 600°C.
$Na_2Mn_5O_{10}$ (Romanechite) tunnel structure was formed.
Synthesized product (d): Firing temperature, 700°C.
$Na_{0.44}MnO_2$ tunnel structure was formed.
Synthesized product (e): Firing temperature, 800°C.
$Na_{0.44}MnO_2$ tunnel structure was formed.
Synthesized product (f): Firing temperature, 900°C.
$Na_{0.44}MnO_2$ tunnel structure was formed.

(2) The $Na_2CO_3$ and $MnCO_3$ were mixed together such that the Na/Mn mole ratio was 0.44, and were fired at various temperatures (400°C to 900°C) to synthesize the Na-Mn-O type manganese oxides (NMO) having the Na/Mn mole ratio of 0.44 in the same manner as described above.
Fig. 18 shows the results of XRD measurements of the synthesized products (a) to (f) that were obtained. The firing temperatures and the results of XRD analysis of the synthesized products were as described below.

Synthesized product (a): Firing temperature, 400°C.
Exhibited almost no diffraction peak. It was almost amorphous phase.
Synthesized product (b): Firing temperature, 500°C.
$Na_2Mn_5O_{10}$ (Romanechite) tunnel structure was formed.
Synthesized product (c): Firing temperature, 600°C.
$Na_2Mn_5O_{10}$ (Romanechite) tunnel structure was formed.
Synthesized product (d): Firing temperature, 700°C.
$Na_{0.44}MnO_2$ tunnel structure was formed.

Synthesized product (e): Firing temperature, 800°C.
$Na_{0.44}MnO_2$ tunnel structure was formed.
Synthesized product (f): Firing temperature, 900°C.
$Na_{0.44}MnO_2$ tunnel structure was formed.

(3) The $Na_2CO_3$ and $MnCO_3$ were mixed together such that the Na/Mn mole ratio was 0.7, and were fired at various temperatures (400°C to 900°C) to synthesize the Na-Mn-O type manganese oxides (NMO) having the Na/Mn mole ratio of 0.7 in the same manner as described above.

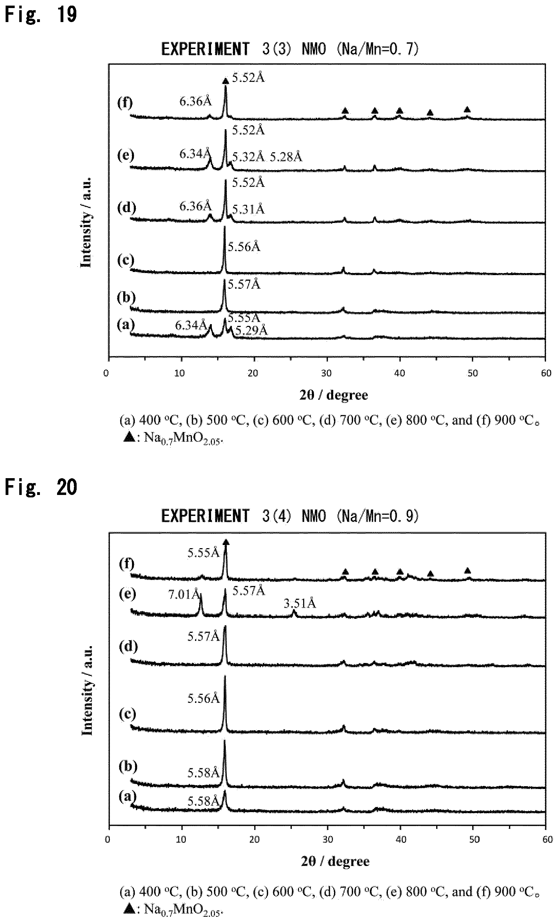

Fig. 19 shows the results of XRD measurements of the synthesized products (a) to (f) that were obtained. The firing temperatures and the results of XRD analysis of the synthesized products were as described below.

Synthesized product (a): Firing temperature, 400°C.

Layered structure ($Na_{0.7}MnO_{2.05}$) was formed but the $Na_{0.44}MnO_2$ tunnel structure was not formed. A peak near $2\theta = 14$ degrees (basal spacing d = 6.34 Å) was corresponding to the (001) plane of the layered structure in which water molecules were entering into the interlayer spaces. Namely, the synthesized product (a) was absorbing water in the air, and the basal spacing was expanding.
Further, a peak near $2\theta = 17$ degrees (interplanar spacing d = 5.3 Å) was corresponding to the $Na_2Mn_5O_{10}$ (Romanechite) tunnel structure.

Synthesized product (b): Firing temperature, 500°C.
Layered structure ($Na_{0.7}MnO_{2.05}$) only was formed.
Synthesized product (c): Firing temperature, 600°C.
Layered structure ($Na_{0.7}MnO_{2.05}$) only was formed.
Synthesized product (d): Firing temperature, 700°C.

Layered structure ($Na_{0.7}MnO_{2.05}$) was formed but the $Na_{0.44}MnO_2$ tunnel structure was not formed. A peak near $2\theta = 14$ degrees (basal spacing d = 6.34 Å) was corresponding to the (001) plane of the layered structure in which water molecules were entering into the interlayer spaces. Namely, the synthesized product (d) was absorbing water in the air, and the basal spacing was expanding.
Further, a peak near $2\theta = 17$ degrees (interplanar spacing d = 5.3 Å) was corresponding to the $Na_2Mn_5O_{10}$ (Romanechite) tunnel structure.

Synthesized product (e): Firing temperature, 800°C.

Layered structure ($Na_{0.7}MnO_{2.05}$) was formed but the $Na_{0.44}MnO_2$ tunnel structure was not formed. A peak near $2\theta = 14$ degrees (basal spacing d = 6.34 Å) was corresponding to the (001) plane of the layered structure in which water molecules were entering into the interlayer spaces. Namely, the product e was absorbing water in the air, and the basal spacing was expanding.
Further, a peak near $2\theta = 17$ degrees (interplanar spacing d = 5.3 Å) was corresponding to the $Na_2Mn_5O_{10}$ (Romanechite) tunnel structure.

Synthesized product (f): Firing temperature, 900°C.

Layered structure ($Na_{0.7}MnO_{2.05}$) was formed but the $Na_{0.44}MnO_2$ tunnel structure was not formed. A peak near $2\theta = 14$ degrees (basal spacing d = 6.34 Å) was corresponding to the (001) plane of the layered structure in which water molecules were entering into the interlayer spaces. Namely, the synthesized product (f) was absorbing water in the air, and the basal spacing was expanding.
Further, a peak near $2\theta = 17$ degrees (interplanar spacing d = 5.3 Å) was corresponding to the $Na_2Mn_5O_{10}$ (Romanechite) tunnel structure.

(4) The $Na_2CO_3$ and $MnCO_3$ were mixed together such that the Na/Mn mole ratio was 0.9, and were fired at various temperatures (400°C to 900°C) to synthesize the Na-Mn-O type manganese oxides (NMO) having the Na/Mn mole ratio of 0.9 in the same manner as described above.
Fig. 20 shows the results of XRD measurements of the synthesized products (a) to (f) that were obtained. The firing temperatures and the results of XRD analysis of the synthesized products were as described below.

Synthesized product (a): Firing temperature, 400°C.
Layered structure ($Na_{0.7}MnO_{2.05}$) only was formed.
Synthesized product (b): Firing temperature, 500°C.
Layered structure ($Na_{0.7}MnO_{2.05}$) only was formed.
Synthesized product (c): Firing temperature, 600°C.
Layered structure ($Na_{0.7}MnO_{2.05}$) only was formed.
Synthesized product (d): Firing temperature, 700°C.
Layered structure ($Na_{0.7}MnO_{2.05}$) only was formed.
Synthesized product (e): Firing temperature, 800°C.
Layered structure ($Na_{0.7}MnO_{2.05}$) only was formed. A peak near $2\theta$ = 13 degrees (basal spacing d = 7.01 Å) was corresponding to the (001) plane of the layered structure in which water molecules were entering into the interlayer spaces. Namely, the synthesized product (e) was absorbing water in the air, and the basal spacing was expanding.
Synthesized product (f): Firing temperature, 900°C.
Layered structure ($Na_{0.7}MnO_{2.05}$) only was formed.

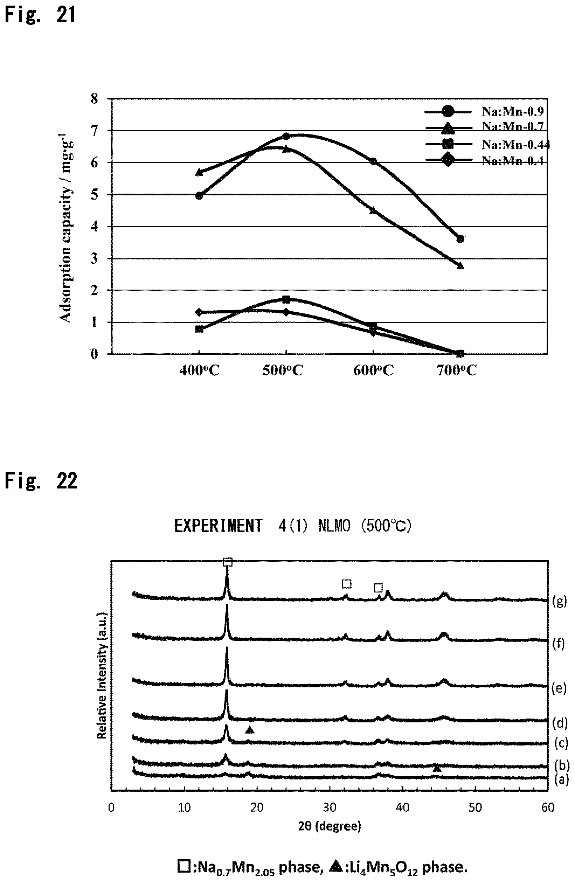

Among the products synthesized above, those obtained by being fired at 400°C to 700°C were subjected to the adsorption test using the standard seawater (seawater of 100% of the concentration of 100% that has not been diluted) conducted in the Experiment 1 to measure their capabilities for adsorbing the Sr ions. Fig. 21 shows the results.
When the tunnel structures have been formed (Na/Mn mole ratios were 0.4 and 0.44), the synthesized products adsorbed the Sr ions in decreased amounts. When the layered structures have been formed (Na/Mn mole ratios were 0.7 and 0.9), however, the synthesized products adsorbed the Sr ions in increased amounts. It was, further, learned that as the firing temperature exceeded 500°C, the amount of Sr ion adsorption decreased gradually.

<Experiment 4>

Study of the substituted type Mn oxide (NLMO or NTMO);

(1) The $Na_2CO_3$, $MnCO_3$ and $Li_2CO_3$ were mixed together at various ratios and were fired at 500°C to synthesize the Na-Li-Mn-O type manganese oxides (NLMO) having the Na/(Li+Mn) mole ratios in a range of 0.4 to 1 in the same manner as in the Experiment 1.
Fig. 22 shows the results of XRD measurements of the synthesized products (a) to (g) that were obtained.
The Na/(Li+Mn) mole ratios of the synthesized products and the results of analysis by XRD were as described below.

Synthesized product (a):

Na/ (Li+Mn) mole ratio = 0.4, $\alpha/\beta$ = 0,
Layered structure and $Li_4Mn_5O_{12}$ (spinel structure) tunnel structure were formed.

Synthesized product (b):

Na/(Li+Mn) mole ratio = 0.5, $\alpha/\beta$ = 0,
Layered structure and $Li_4Mn_5O_{12}$ (spinel structure) tunnel were formed.

Synthesized product (c):

Na/(Li+Mn) mole ratio = 0.6, $\alpha/\beta$ = 0,
Layered structure only was formed.

Synthesized product (d):

Na/ (Li+Mn) mole ratio = 0.7, $\alpha/\beta$ = 0,
Layered structure only was formed.

Synthesized product (e):

Na/ (Li+Mn) mole ratio = 0.8, $\alpha/\beta$ = 0,

Layered structure only was formed.

Synthesized product (f):

Na/ (Li+Mn) mole ratio = 0.9, $\alpha/\beta$ = 0,
Layered structure only was formed.

Synthesized product (g):

Na/ (Li+Mn) mole ratio = 1.0, $\alpha/\beta$ = 0,
Layered structure only was formed.

(2) Instead of $Li_2CO_3$, a carbonate of Co, a carbonate of Ni and a carbonate of Cu were mixed with $Na_2CO_3$ and $MnCO_3$, and the mixtures thereof were fired at 500°C to synthesize the Na-T-Mn-O type manganese oxides (NTMO) having the Na/(T+Mn) mole ratio of 0.7 in the same manner as described above.

Here, T stands for Co, Ni or Cu.

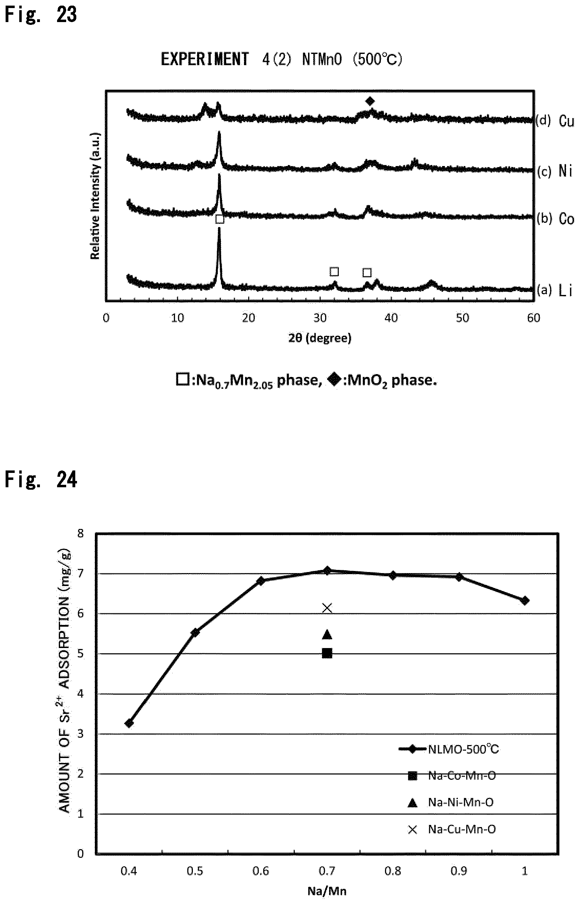

Fig. 23 shows the results of XRD measurements of the synthesized products (a) to (d) that were obtained. In Fig. 23, the synthesized product (a) was the Na-Li-Mn-O type manganese oxide having the Na/(Li+Mn) mole ratio of 0.7 that was obtained in the Experiment (1) described above.
The Na/(Li+Mn) and Na/(T+Mn) mole ratios of the synthesized products and the results of analysis by XRD were as described below.

Synthesized product (a):

Na/ (Li+Mn) mole ratio = 0.7, $\alpha/\beta$ = 0,
Layered structure only was formed.

Synthesized product (b):

Na/(Co+Mn) mole ratio = 0.7, $\alpha/\beta$ = 0,
Layered structure only was formed.

Synthesized product (c):

Na/(Ni+Mn) mole ratio = 0.7, $\alpha/\beta$ = 0,
Layered structure only was formed. A peak near $2\theta$ = 13 degrees was corresponding to the (001) plane of the layered structure in which water molecules were entering into the interlayer spaces. Namely, water in the air was absorbed and the basal spacing was expanding.

Synthesized product (d):

Na/(Cu+Mn) mole ratio = 0.7, $\alpha/\beta$ = 0,
Layered structure only was formed. A peak near $2\theta$ = 13 degrees was corresponding to the (001) plane of the layered structure in which water molecules were entering into the interlayer spaces. Namely, water in the air was absorbed and the basal spacing was expanding.

The synthesized products obtained in the above Experiments (1) and (2) were subjected to the adsorption test using the seawater of the concentration of 100% to measure the capabilities of adsorbing the Sr ions. The results were as shown in Fig. 24.
Among these synthesized products, the Li-substituted type manganese oxide adsorbed the Sr ions in the greatest amount. The amount of adsorption was large when the Na/(Li+Mn) mole ratio was not less than 0.5 and, specifically, was 0.7.

<Experiment 5>

Study of the Mg-substituted type Mn oxides (NMgMO);
The $Na_2CO_3$, $MnCO_3$ and $MgCO_3$ were mixed together at various ratios and were fired at 500°C to synthesize the Na-Mg-Mn-O type manganese oxides (NMgMO) having Na/(Mg+Mn) mole ratios in a range of 0.4 to 1 in the same manner as in the Experiment 4 (1) .

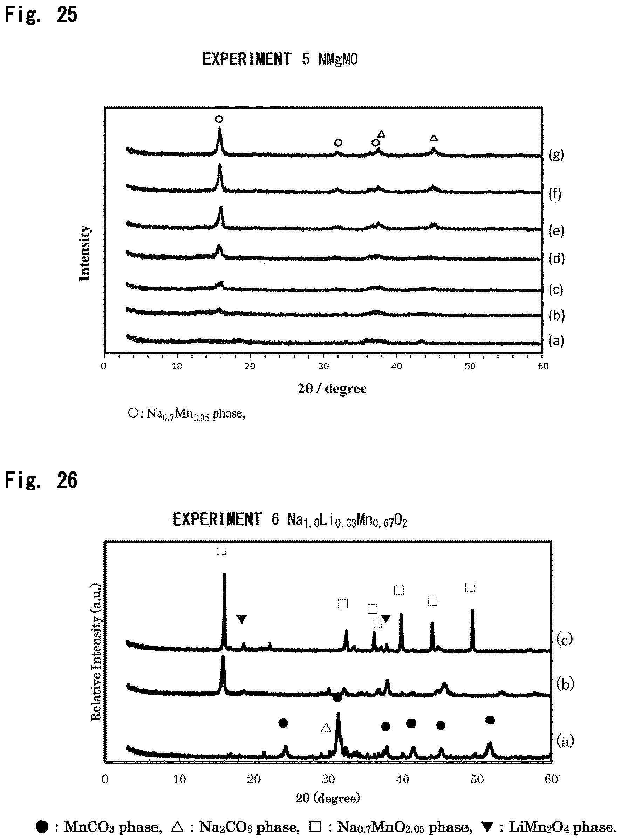

Fig. 25 shows the results of XRD measurements of the synthesized products (a) to (g) that were obtained.

The Na/(Mg+Mn) mole ratios of the synthesized products and the results of analysis by XRD were as described below.

Synthesized product (a):

Na/(Mg+Mn) mole ratio = 0.4, $\alpha/\beta$ = 0,
Exhibited small diffraction peaks. It was almost amorphous phase.

Synthesized product (b):

Na/(Mg+Mn) mole ratio = 0.5, $\alpha/\beta$ = 0,
Layered structure only was formed.

Synthesized product (c):

Na/(Mg+Mn) mole ratio = 0.6, $\alpha/\beta$ = 0,
Layered structure only was formed.

Synthesized product (d):

Na/ (Mg+Mn) mole ratio = 0.7, $\alpha/\beta$ = 0,
Layered structure only was formed.

Synthesized product (e):

Na/(Mg+Mn) mole ratio = 0.8, $\alpha/\beta$ = 0,
Layered structure only was formed.

Synthesized product (f):

Na/(Mg+Mn) mole ratio = 0.9, $\alpha/\beta$ = 0,
Layered structure only was formed.

Synthesized product (g):

Na/ (Mg+Mn) mole ratio = 1.0, $\alpha/\beta$ = 0,
Layered structure only was formed.

The synthesized products (a) and (f) obtained above were subjected to the adsorption test using the standard seawater (seawater of the concentration of 100% which has not been diluted) to measure their capabilities for adsorbing the Sr ions. The measured results were as follows:

Synthesized product (a): 3.32 mg/g
Synthesized product (f): 6.08 mg/g

<Experiment 6>

Study of the Li-substituted type adsorbents ($Na_{1.0}Li_{0.33}Mn_{0.67}O_2$);

By using a sodium carbonate, a lithium carbonate and a manganese carbonate, a starting mixture of an Na/Li/Mn mole ratio of 1.0/0.33/0.67 was prepared and was fired at 500°C and 700°C in the same manner as in the Experiment 1-(3) to obtain fired products (synthesized products) of the following composition.

$$Na_{1.0}Li_{0.33}Mn_{0.67}O_2$$

(x = 1.0, z = 0.33, q = 0)

Fig. 26 shows the results of XRD measurements of the fired products as well as the measured results of the starting mixture. In Fig. 26, (a) is a diffraction pattern of the starting mixture, (b) is a diffraction pattern of the synthesized product (fired product) fired at 500°C and (c) is a diffraction pattern of the synthesized product (fired product) fired at 700°C.

The temperatures for firing the synthesized products and the results of analysis by XRD were as described below.

Synthesized product (b): Firing temperature, 500°C.
Layered structure ($Na_{0.7}MnO_{2.05}$) and $LiMn_2O_4$ (spinel structure) tunnel structure were formed. $\alpha/\beta$ = 0.
Synthesized product (c): Firing temperature, 700°C.
Layered structure ($Na_{0.7}MnO_{2.05}$) and $LiMn_2O_4$ (spinel structure) tunnel structure were formed. $\alpha/\beta$ = 0.

The synthesized products (b) and (c) obtained above were subjected to the adsorption test using the standard seawater (seawater of the concentration of 100% that has not been diluted) to measure their capabilities for adsorbing the Sr ions. The measured results were as follows:

Synthesized product (b): 5.87 mg/g (adsorption rate: 66.0%)
Synthesized product (c): 4.00 mg/g (adsorption rate: 44.9%)

Industrial Applicability:

The strontium ion adsorbent of the present invention can be used for removing the strontium ions from the seawater that contains the strontium ions, such as radiation contaminated water drained as a result of an accident in the nuclear power plants.

**Claims**

1. A strontium ion adsorbent containing a manganese oxide that has a layered crystal structure and contains sodium ions in an interlayer space of the layered crystal structure.

2. The strontium ion adsorbent according to claim 1, wherein the manganese oxide exhibits diffraction peaks specific to the layered crystal structure in the regions of $2\theta$ = 15 to 17 degrees, 31 to 34 degrees and 35 to 38 degrees, respectively, in the X-ray diffraction (Cu-K$\alpha$).

3. The strontium ion adsorbent according to claim 1, wherein the manganese oxide contained in the strontium ion adsorbent has a tunnel crystal structure containing the sodium ions in the tunnels thereof and that exhibits diffraction peaks specific to the tunnel crystal structure in the regions of $2\theta$ = 13 to 15 degrees, 15 to 18 degrees, 18 to 21 degrees, 33 to 35 degrees, 36 to 39 degrees and 50 to 53 degrees, respectively, in the X-ray diffraction (Cu-K$\alpha$).

4. The strontium ion adsorbent according to claim 2 or 3, wherein the strontium ion adsorbent has an atomic composition represented by a following formula (1) or (2):

$$(1) \qquad Na_xT_yMn_{1-y}$$

wherein

T is a polyvalent metal, and
x and y are numbers, respectively, satisfying $0.4 \leqq x \leqq 1$, and $0 \leqq y \leqq 0.44$,

$$(2) \qquad Na_xLi_zMn_{1-z}$$

wherein

Li is a lithium atom substituted for Mn, and
x and z are numbers, respectively, satisfying $0.4 \leqq x \leqq 1$, and $0 < z \leqq 0.33$.

**5.** The strontium ion adsorbent according to claim 4, wherein the polyvalent metal T in the above formula (1) is Al, Co, Ni, Cu or Mg.

**6.** The strontium ion adsorbent according to claim 4, wherein in the above formulas (1) and (2), x is a number satisfying $0.44 \leqq x \leqq 1$.

**7.** The strontium ion adsorbent according to claim 6, wherein in the above formulas (1) and (2), x is a number satisfying $0.6 \leqq x \leqq 1$.

**8.** The strontium ion adsorbent according to claim 1, containing the manganese oxide that has the layered crystal structure and contains the sodium ions in the interlayer spaces thereof, has an $Na_{0.7}MnO_{2.05}$ layered crystal structure.

**9.** A process for producing the strontium ion adsorbent of claim 1 by mixing at least one kind of an interlayer metal source compound selected from the group consisting of a sodium salt, a sodium oxide and a sodium hydroxide, and at least one kind of a manganese source compound selected from the group consisting of a manganese salt, a manganese oxide and a manganese hydroxide, and firing the mixture thereof at a temperature of not lower than 400°C.

**10.** The production process according to claim 9, wherein at least one kind of a polyvalent metal source compound selected from the group consisting of a polyvalent metal salt, a polyvalent metal oxide and a polyvalent metal hydroxide, is fired upon being mixed with the interlayer metal source compound and the manganese source compound.

**11.** The production process according to claim 9, wherein at least one kind of a lithium source compound selected from the group consisting of a lithium salt, a lithium oxide and a lithium hydroxide is used as the Mn-substituted metal source, and is fired upon being mixed with the interlayer metal source compound and the manganese source compound.

Fig. 1

: Na$^+$

MnO$_6$
OCTAHEDRON

Na$_{0.7}$MnO$_{2.05}$

Fig. 2

: Na$^+$

MnO$_6$
OCTAHEDRON

MnO$_5$
PENTAHEDRON

Na$_{0.44}$MnO$_2$

# Fig. 3

EXPERIMENT 1(1) NMO

(a) mixture sample, (b) 400 °C, (c) 500 °C, (d) 600 °C, (e) 700 °C, (f) 800 °C, and (g) 900 °C, respectively. $\bigcirc$: $Na_{0.44}MnO_2$, $\blacktriangle$: $MnO_2$, $\blacksquare$: $MnCO_3$.

# Fig. 4

## Fig. 5

EXPERIMENT 1(2) NAMO

(a) mixture sample, (b) 600 °C, (c) 700 °C, (d) 800 °C, (e) 900 °C, respectively.
O: $Na_{0.44}MnO_2$, □: $Na_{0.7}MnO_{2.05}$, ●: $Al(OH)_3$, ■: $MnCO_3$, ◆: $Na_2CO_3$.

## Fig. 6

## Fig. 7

EXPERIMENT 1(3) NLMO

(a) mixture sample, (b) 400 ºC, (c) 500 ºC, (d) 550 ºC, (e) 600 ºC, (f) 650 ºC, (g) 700 ºC, (h) 800 ºC, and (i) 900 ºC, respectively. $\bigcirc$: $Na_{0.44}MnO_2$, $\square$: $Na_{0.7}MnO_{2.05}$, $\bullet$: $Li_4Mn_5O_{12}$, $\blacksquare$: $MnCO_3$, $\blacklozenge$: $Na_2CO_3$.

## Fig. 8

Fig. 9

Fig. 10

## Fig. 11

EXPERIMENT 2(1) NMO (600°C)

Na /Mn mole ratio (a) 0.4:1, (b) 0.44:1, (c) 0.5:1, (d) 0.6:1, (e) 0.7:1, (f) 0.8:1, (g) 0.9:1, (h) 1:1。
■: $Na_2Mn_5O_{10}$ (d: 5.39Å), ●: $Na_4Mn_9O_{18}$, ▲: $Na_{0.7}MnO_{2.05}$ (d: 5.6Å).

## Fig. 12

## Fig. 13

EXPERIMENT 2(1) SAMPLES WASHED WITH WATER

Na/Mn mole ratio (a) 0.4:1, (b) 0.44:1, (c) 0.5:1,
(d) 0.6:1, (e) 0.7:1, (f) 0.8:1, (g) 0.9:1, (h) 1:1。

## Fig. 14

EXPERIMENT 2(1) SAMPLES WASHED WITH WATER

Fig. 15

EXPERIMENT 2(2) NMO (500°C)

$\blacksquare$: $Na_2Mn_5O_{10}$ (d: 5.39Å), $\bullet$: $Na_4Mn_9O_{18}$, $\blacktriangle$: $Na_{0.7}MnO_{2.05}$ (d: 5.6Å).

Fig. 16

Fig. 17

EXPERIMENT 3(1) NMO (Na/Mn=0.4)

(a) 400 °C, (b) 500 °C, (c) 600 °C, (d) 700 °C, (e) 800 °C, (f) 900 °C.
●: $Na_4Mn_9O_{18}$, and ■: $Na_2Mn_5O_{10}$.

Fig. 18

EXPERIMENT 3(2) NMO (Na/Mn=0.44)

(a) 400 °C, (b) 500 °C, (c) 600 °C, (d) 700 °C, (e) 800 °C, (f) 900 °C.
●: $Na_4Mn_9O_{18}$, and ■: $Na_2Mn_5O_{10}$.

Fig. 19

EXPERIMENT 3(3) NMO (Na/Mn=0.7)

(a) 400 °C, (b) 500 °C, (c) 600 °C, (d) 700 °C, (e) 800 °C, and (f) 900 °C。
▲: $Na_{0.7}MnO_{2.05}$.

Fig. 20

EXPERIMENT 3(4) NMO (Na/Mn=0.9)

(a) 400 °C, (b) 500 °C, (c) 600 °C, (d) 700 °C, (e) 800 °C, and (f) 900 °C。
▲: $Na_{0.7}MnO_{2.05}$.

Fig. 21

Fig. 22

EXPERIMENT 4(1) NLMO (500°C)

□:Na$_{0.7}$Mn$_{2.05}$ phase, ▲:Li$_4$Mn$_5$O$_{12}$ phase.

**Fig. 23**

EXPERIMENT 4(2) NTMnO (500°C)

$\square$:$Na_{0.7}Mn_{2.05}$ phase, ◆:$MnO_2$ phase.

**Fig. 24**

Fig. 25

EXPERIMENT 5 NMgMO

$\bigcirc$: $Na_{0.7}Mn_{2.05}$ phase,

Fig. 26

EXPERIMENT 6 $Na_{1.0}Li_{0.33}Mn_{0.67}O_2$

$\bullet$ : $MnCO_3$ phase, $\triangle$ : $Na_2CO_3$ phase, $\square$ : $Na_{0.7}MnO_{2.05}$ phase, $\blacktriangledown$ : $LiMn_2O_4$ phase.

**INTERNATIONAL SEARCH REPORT**

International application No.

PCT/JP2016/080081

| | |
|---|---|
| **A. CLASSIFICATION OF SUBJECT MATTER** | |

*B01J20/06*(2006.01)i, *B01J20/30*(2006.01)i, *C01G45/02*(2006.01)i, *G21F9/12*(2006.01)i

According to International Patent Classification (IPC) or to both national classification and IPC

**B. FIELDS SEARCHED**

Minimum documentation searched (classification system followed by classification symbols)
B01J20/00-20/34, C01G45/00-45/12, G21F9/12

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | DYER Alan et al., Sorption characteristics of radionuclides on synthetic birnessite-type layered manganese oxides, J. Mater. Chem., 2000.07.12, 2000,10, p.1867-1874, ISSN 0959-9428, particularly, Abstract, Experimental, table 1, p.1869 left column, fig. 2, Summary and conclusions | 1-8<br>9-11 |
| Y | JP 2013-91579 A (Tosoh Corp.),<br>16 May 2013 (16.05.2013),<br>claims 1 to 2, 9; examples<br>(Family: none) | 9-11 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 November 2016 (22.11.16) | Date of mailing of the international search report<br>06 December 2016 (06.12.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/080081

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-540093 A  (Korea Institute of Geoscience and Mineral Resources), 31 October 2013 (31.10.2013), claim 1; paragraphs [0052], [0073] to [0074]; fig. 8 & US 9174196 B2 claim 1; column 6, lines 58 to 63; column 8, line 63 to column 9, line 8; fig. 8 | 1-11 |
| A | JP 2006-225201 A  (Tosoh Corp.), 31 August 2006 (31.08.2006), claims 1 to 2; paragraph [0041]; examples (Family: none) | 1-11 |
| A | WO 2015/037734 A1  (Hideki KOYANAKA), 19 March 2015 (19.03.2015), claim 1; paragraph [0031]; examples & US 2016/0233001 A1 claim 1; paragraph [0044]; examples | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. KAJI ; T. ASANO.** Development of an adsorbent capable of adsorbing cesium and strontium simultaneously. *Isotope News,* December 2013, 18-22
- **K. MORI ; M. IWASAKI ; H. MIMURA ; H. KANDA.** Development of a strontium adsorbent using a layered potassium titanate as a base material. *J. Ion Exchange,* 2015, vol. 26 (3), 6-12
- **Q. FENG ; H. KANOH ; Y. MIYAI ; K. OOI.** Alkali metal ions insertion/extraction reactions with hollandite-type manganese oxide in the aqueous phase. *Chem. Mater.,* 1995, vol. 7, 148-253